# EUROPEAN PATENT APPLICATION

(11) **EP 3 331 198 A1**
(43) Date of publication of application: **06.06.2018**
(21) Application number: 16306602.0
(22) Date of filing: 02.12.2016
(51) Int. Cl.: H04L 12/24, H04L 12/26

(54) **METHOD AND DEVICE FOR MONITORING A DSL NETWORK**

(71) Applicant: Alcatel Lucent, 91620 Nozay (FR)
(72) Inventor: DUPUIS, Nicolas, 6041 Gosselies (BE); DROOGHAAG, Benoît, 6041 Gosselies (BE)
(74) Representative: Nokia Bell Patent Attorneys

(57) **Abstract**

Embodiments relate to a method for monitoring a DSL network (1), executed by a monitoring device (5), comprising:
- obtaining (S1) operational data describing the functioning of a plurality of DSL ports, Service Level Agreement data specifying technical requirements associated with respective DSL ports, and ticketing data specifying user complains associated with respective DSL ports,
- determining (S3) quality estimators in function of the operational data and the Service Level agreement data,
- training (S6) a monitoring model in function of the operational data, Service Level Agreement data, quality estimators and ticketing data.

## Description

### FIELD OF THE INVENTION

The present invention relates to the field of telecommunication. In particular, the present invention relates to a method and a device for monitoring a DSL network.

### BACKGROUND

In a DSL network, an access node provides DSL operating parameters which may be used for estimating the quality of experience of DSL subscribers. Estimating the quality of experience from DSL operational parameters has been under study, as this usually drive the improvement actions and/or trigger alarms or diagnosis. Ultimately, predicting accurately that a subscriber will complain within a very short period if no action is taken rapidly is the holy grail in network troubleshooting as this may enable the pro-active maintenance approach, i.e. acting before customer starts to complain. Being able to be accurate in a context where different DSL technologies are deployed, where customers are not subscribing for the same service and where they are not requesting the same content is moreover quite challenging.

One known technique for estimating the quality of experience in function of DSL operational parameters comprises determining quality estimators that have been defined by experts. Such quality estimators, for instance the Mean-Time-Between-Errors (MTBE), have been proposed by subject matter experts as a metric which tends to be correlated with line quality. It has been shown that subscribers complaining have such a low MTBE. A threshold has been therefore defined, still by best-practice rules of thumb or via more elaborated theory. Other metrics, such as MTBR or Quality/Speed Score follow this logic.

However, there are several major drawbacks to such approach. First, it tends to not detect a lot of cases. For instance, some subscribers are complaining about a poor internet access quality, stability or speed, but all the indicators (metrics) are green (good). Second, these thresholds or rules are applied independently on each day and do not tend to detect time patterns that also lead to bad experience. Only weekly pattern used in such product are aggregating the independent daily metrics to conclude about a more robust estimation of the extreme (GOOD are very GOOD, bad are very BAD, but intermediate cases are difficult to capture). Moreover, these estimators have not been designed to predict subscribers complain.

Besides the performances, with such approach, a major drawback resides in the tuning. Typically, each network needs first to be audited by a domain expert, and the tuning of such estimators (their definition, the thresholds, their relationships, depending on the subscriber's offers, etc...) is a long iterative process to achieve an optimal configuration. This costs a lot of time, support and specific expertise and the time-to-operation is quite long.

Another known approach relies on machine learning techniques. All the DSL operational parameters of an entire network are stored in a database and, via classical machine learning techniques (decision trees, random forest, logistic regression/classification, Bayesian network...), the machine tends to learn a model which does automatically the optimal matching between these operational values and the customer's complains.

With such approach, as a lot of non-useful parameters are used to learn such a model, this tends to create a lot of "noise" and the final accuracy of such model is quite low. Even when adding some automated methods to filter-out outliers or to try to select only the relevant parameters, key information can be lost during such process while the "noisy" aspect of such blind learning may still be significant. Another major drawback of such approach is the lack of control. Even if fairly good results can be achieved, weights could have been assigned to parameters which, by nature, are not relevant at all but are however "correlated" with the outputs. This means the classification/decision is taken on irrelevant parameters and, soon or later, will lead such system to fail.

### SUMMARY

It is thus an object of embodiments of the present invention to propose methods and devices for monitoring a DSL network, which do not show the inherent shortcomings of the prior art.

Accordingly, embodiments relate to a method for monitoring a DSL network, executed by a monitoring device, comprising:
- obtaining operational data describing the functioning of a plurality of DSL ports, Service Level Agreement data specifying technical requirements associated with respective DSL ports, and ticketing data specifying user complains associated with respective DSL ports,
- determining quality estimators in function of the operational data and the Service Level agreement data,
- training a monitoring model in function of the operational data, Service Level Agreement data, quality estimators and ticketing data.

Correlatively, embodiments relate to a monitoring device for monitoring a DSL network, comprising means configured for:
- obtaining operational data describing the functioning of a plurality of DSL ports, Service Level Agreement data specifying technical requirements associated with respective DSL ports, and ticketing data specifying user complains associated with respective DSL ports,
- determining quality estimators in function of the operational data and the Service Level agreement data,
- training a monitoring model in function of the operational data, Service Level Agreement data, quality estimators and ticketing data.

The quality estimators may include at least one of:
- Mean Time Between Errors, representative of a ratio between ShowTime duration and a number of errors,
- Mean Time Between Resynchronizations, representative of a ratio between ShowTime duration and a number of spontaneous modem resynchronizations,
- Service Bitrate budget, representative of a difference between an actual bitrate and a minimum subscribed bitrate,
- Required bitrate budget, determined as a function of a type of service,
- Quality bitrate budget, representative of a difference between actual bitrate and required bitrate budget,
- Quality level, determined as a function of the type of service.

Embodiments may comprise selecting parameters in the operational data and service level agreement data, wherein the quality estimators are determined in function of the selected parameters and not in function of non-selected parameters, and wherein the monitoring model is trained in function of the selected parameters and not in function of non-selected parameters.

The selected parameters may include at least one of:
- Actual bitrate
- Errored Seconds
- Code Violations
- Severely Errored seconds
- Spontaneous modem resynchronization
- Showtime duration
- Minimum subscribed bitrate
- Type of service.

In some embodiments, the operational data specifies successive values of DSL operational parameters over a time period, the method comprising determining a feature set in function of the operational data and the quality estimators by feature extraction, wherein the feature set has a lower dimension than the operational data and the quality estimators.

The feature set may be determined by a convolution pre-processing.

Some embodiments comprise estimating or predicting a quality of experience and/or predicting a user complain by using the monitoring model.

Some embodiments comprise executing a corrective action in response to predicting a user complain.

Embodiments also relate to a computer program comprising instructions for performing the method mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a DSL network,
Figure 2 is a functional block diagram of the monitoring device of the network of Figure 1,
Figures 3 and 4 are flowcharts of methods executed by the monitoring device of Figure 2, and
Figure 5 is structural view of the monitoring device of Figure 2.

### DESCRIPTION OF EMBODIMENTS

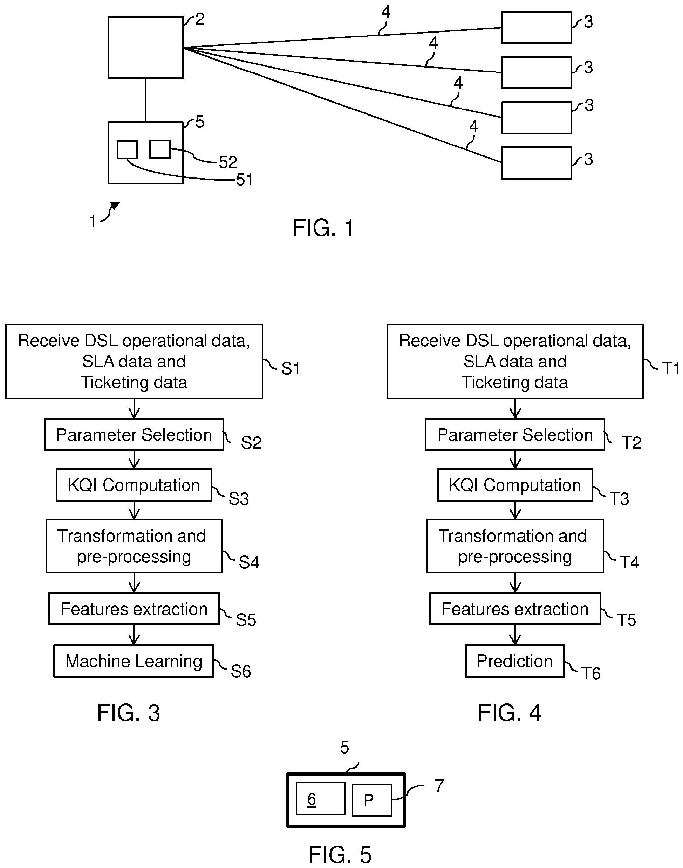

**Figure 1** is a bloc diagram of a DSL network 1. The DSL network 1 comprises one or more access nodes 2 (only one of which is shown), a plurality of client devices 3, a plurality of telecommunication lines 4 and a monitoring device 5.

An access node 2 comprises a plurality of DSL ports to which respective client devices 3 are connected through a telecommunication line 4. An access node 2 and a client device 3 are configured for communication through the telecommunication line 4 using DSL technology, for example based on ADSL, VDSL2, G.FAST... An access node 2 is for example a DSLAM and a client device 3 is for example a CPE, a DSL modem...

An access node 2 provides operational data describing the functioning of its DSL ports. The operational data specifies operational parameters, which may include at least one of:
- Actual Power (US/DS)
- Actual Noise Margin (US/DS)
- Actual Bitrate (US/DS)
- Attenuation (US/DS)
- Electrical Length
- Code violation (US/DS)
- Errored seconds (US/DS)
- Severely errored seconds (US/DS)
- Modem failed initializations
- Modem resynchronization
- Showtime duration
- Actual Impulse Noise protection (US/DS)
- Actual Delay (US/DS)

Usually, these operational parameters are available for each client device 3 (each DSL port) at regular time interval (e.g. daily, or every 15-min).

The DSL network 1 is operated by a network operator, which may provide differentiated services to respective subscribers. Accordingly, the network operator maintains Service Level Agreement (SLA) data, which specifies technical requirements associated with respective DSL ports, depending of contractual services and subscriber's requirements/expectations. The technical requirements specified by the SLA data may include for example at least one of:
- Minimum subscribed bitrate (US/DS)
- Type of service (High Speed Internet, IPTV, Triple Play...)

The network operator operates a customer service. A customer may contact the customer service and register a complain. For example, a customer may complain about dropped connection or low speed. The network operator stores ticketing data specifying user complains associated with respective DSL ports. The ticketing data may specify for example:
- A time stamp of the complain
- A type of complain (low speed, dropped connection...)

The monitoring device 5 comprises a model training module 51 and a quality monitoring module 52.

The model training module 51 is configured for training a machine-learning model in function of the operational data, the Service Level Agreement data and the Ticketing data, which aims at estimating and/or predicting the DSL subscriber's quality of experience and the related degradation complains. The model training module 51 is configured to learn autonomously the relationships between patterns founds in relevant DSL features and various subscriber complains.

The quality monitoring module 52 uses the model trained by the model training module 51 for estimating and/or predicting the Quality of Experience (QoE) of DSL subscribers, and/or for predicting user complains, in function of the operational data and the Service Level Agreement data.

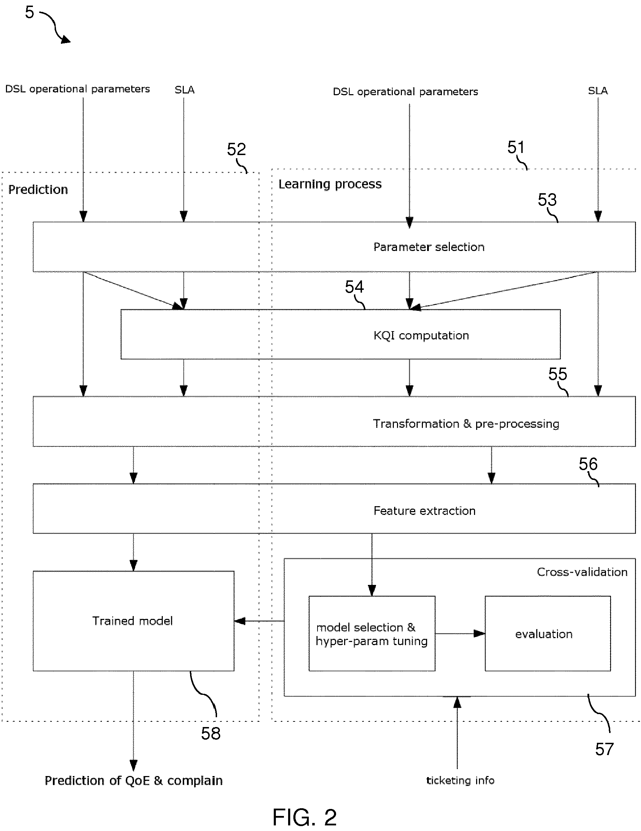

The functioning of the monitoring device 5 is described hereafter in more details with reference to Figure 2 to 5.

**Figure 2** is a functional block diagram of the monitoring device 5. The monitoring device 5 comprises a parameter selection module 53, a KQI computation module 54, a transformation and pre-processing module 55, a feature extraction module 56, a machine learning module 57 and a trained model module 58. The model training module 51 uses the parameter selection module 53, the KQI computation module 54, the transformation and pre-processing module 55, the feature extraction module 56 and the machine learning module 57. The quality monitoring module 52 uses the parameter selection module 53, the KQI computation module 54, the transformation and pre-processing module 55, the feature extraction module 56 and the trained model module 58.

The parameter selection module 53 selects, in the operational parameters specified by the operational data and in the technical requirements specified by the Service Level Agreement data, operational parameters and technical requirements which are regarded as relevant for QoE estimation and complains prediction. This is for example a predetermined selection designed based on expert knowledge. Accordingly, the predetermined selection may include selecting DSL operational parameters which are considered by experts as having an influence on QoE estimation and complains prediction, and not selecting DSL operational parameters which are considered by experts as having no or little influence on QoE estimation and complains prediction. The same holds for technical requirements. Hereafter, the selected operational parameters and selected technical requirements are referred to as "selected parameters". In an embodiment, the selected parameters include at least one of:
- Actual bitrate (US/DS)
- Errored Seconds (US/DS)
- Code Violations (US/DS)
- Severely Errored seconds (US/DS)
- Spontaneous modem resynchronization (US/DS)
- Showtime duration
- Minimum subscribed bitrate (US/DS)
- Type of service (High Speed Internet, IPTV, Triple Play...)

The KQI computation module 54 determines quality estimators, also known as Key Quality Indicators (KQI's), in function of the selected parameters. Some KQI's may be determined in function of operational parameters only, and other may be determined by combining operational parameters and technical requirements. The determined KQI's include for example at least one of:
- Mean Time Between Errors, MTBE (US/DS). The MTBE may be determined according to various known techniques, for example MTBE = ShowTime duration / code violation (US/DS)
- Mean Time Between Resynchronizations, MTBR. The MTBR may be determined according to various known techniques, for example MTBR = ShowTime duration / spontaneous modem resynchronization
- Service Bitrate budget (US/DS) = actual bitrate - minimum subscribed bitrate
- Required bitrate budget (US/DS), determined as a function of the type of service, based on expert knowledge from the telecommunication domain
- Quality bitrate budget (US/DS) = actual bitrate - Required bitrate budget
- Quality level (US/DS), determined as a function of the type of service, based on expert knowledge from the telecommunication domain

The transformation and pre-processing module 55 applies some preprocessing to the KQIs and/or to the selected parameters. For example, the pre-processing module 55 linearizes values which are known as non-linear, for instance:
- MTBElog = log10(MTBE)
- MTBRlog = log10(MTBR)
- ...

The feature extraction module 56 uses feature extraction technique (dimensionality reduction technique) to determine a features set in function of the selected parameters and the quality estimators. The feature set has a lower dimension than the selected parameters and the quality estimators. The purpose of the feature extraction module 56 is to extract relevant information from quantities taken regularly over time. Indeed, if data are monitored over a window of a week every 15-min, this means for any selected parameter or KQI, 672 values may be used to train the machine learning model. If D is the number of KQI's and selected parameters, we need to make use of D*672 dimensions to predict the QoE and to separate the complaining subscribers from the others. From technical considerations inherent to machine learning in order to gain in robustness and to be able to generalize the machine learning model, using such high dimensional space to perform classification is not suitable. There is therefore a strong need for reducing this amount of dimensions, however without losing information. Known dimensionality reduction techniques allow to do this. For example, thanks to domain knowledge, as uncertainty exists on the time-to-react to issues (perceptual differences between humans), a convolution preprocessing may be chosen. This allows for each input (selected parameter or KQI) to reduce, for instance, its contribution from 672 dimensions to 3 dimensions, while however capturing the relevant information to predict QoE complains. In other words, the contribution of the history of each parameter is reduced to 3 values (3 dimensions). When taking all the selected parameters and KQI's, this means a space of D*3 dimensions will be used to separate and classify complaining subscribers from others. Please note that the window on which to look, the sampling rate, the convolutional parameters to reduce suitably the amount of dimensions as well the techniques to use (sliding min, max...) may be selected mainly by domain expertise. For example, 48 features (dimensions) are in used in an embodiment, but other embodiments may take advantage of more dimensions.

The machine learning module 57 trains a machine learning model in function of the feature set and the ticketing data. The machine learning model may have one of known model types, such as decision trees, Random Forest, Bayesian network, logistic classification, neural networks, SVM... In one embodiment, the machine learning model is a 2-hidden-layers perceptron (feed forward neural network).

In some embodiments, the machine learning module 57 implements techniques such as normalization/scaling of each input (to give similar prior weights to each dimension) as well as to harmonize the amount of data samples in each category (stratified sampling), cross-validation or bootstrapping in order to avoid over-fitting as well as to improve the ability to generalize.

In some embodiments, the machine learning module 57 trains the machine learning model in function of ticketing data corresponding to complains over a short period of time (e.g. the tickets raised during a day) and/or a subset of the network. In other embodiments, continuously feeding the machine learning module 57 with any subscriber's complain improves the accuracy and tracking evolution of the network/subscriber's behaviors.

The quality monitoring module 52 process operational data and SLA data with the parameter selection module 53, the KQI computation module 54, the transformation and pre-processing module 55, the feature extraction module 56 similarly to the model training module 51. Then, the trained model module 58 estimate and/or predict QoE and/or predicts user complains in function of the determined feature set, using the trained model determined by the model training module 51.

The quality monitoring module 52 may also characterize the major nature of the complain, for instance to state about a low speed issue or a drop connection issue. In some embodiments, more categories related to access network quality of experience are available and described in the ticketing data (for instance "bad quality"), and the quality monitoring module 52 is able to characterize these extra categories as well.

The monitoring device 5 combines expert knowledge (in modules 53 to 56) and machine learning techniques. This allows training and using a machine learning model based on a relevant feature set, thereby avoiding noise introduce by non-relevant parameters. Comparative tests have been performed, which showed that the monitoring device 5 has better performance in predicting dropped connection complains and low speed complains than known monitoring solutions based on expert knowledge only or based on pure machine learning applied directly on operational data without any expert based- input.

In response to predicting low QoE or a user complain for a DSL port, the monitoring device 5 may take corrective actions, which may include at least one of:
- configuring the access node 2 with updated configuration parameters for the DSL port (e.g. updated minimum or maximum bitrate, noise margin...)
- executing troubleshooting process to identify a fault on the telecommunication line 4 in function of the DSL operational parameters
- Asking a technician to examine the telecommunication line 4 on the field
- ...

The monitoring device 5 may be implemented based on distributed computing techniques. In particular, the model training module 51 and the quality monitoring module 52 may run on different hardware.

**Figures 3 and 4** are flowcharts of a method for monitoring the DSL network 1, executed by the monitoring device 5. Figure 3 correspond to a model training phase and Figure 4 correspond to a quality monitoring phase. In some embodiments, the model training phase is executed first, then the trained model is used in the quality monitoring phase. In other embodiments, both phases may be executed concurrently, for example an updated model is trained while the current model is used for quality monitoring.

In the model training phase, the monitoring device 5 obtains DSL operational data, SLA data and ticketing data (Step S1). Then, the monitoring device 5 selects parameters in the DSL operational data and SLA data (Step S2) and determines quality estimators in function of the selected parameters (Step S3). Some of the selected parameters and/or quality estimators are pre-processed (Step S4) and the monitoring device 5 determines a feature set by feature extraction on the selected parameters and/or quality estimators (Step 5). Finally, a machine learning model is trained in function of the feature set and ticketing data (step S6).

In the quality monitoring phase, the monitoring device 5 obtains DSL operational data and SLA data (Step T1). Then, the monitoring device 5 selects parameters in the DSL operational data and SLA data (Step T2) and determines quality estimators in function of the selected parameters (Step T3). Some of the selected parameters and/or quality estimators are pre-processed (Step T4) and the monitoring device 5 determines a feature set by feature extraction on the selected parameters and/or quality estimators (Step T5). Finally, the monitoring device 5 use the trained machine learning model to estimate and/or predict user QoE and/or to predict user complains, in function of the feature set (step T6).

More details about steps S1-S6 and T1-T6 are described here before with reference to Figure 2.

**Figure 5** is a structural view of the monitoring device 5, which comprises a processor 6 and a memory 7. The memory 7 stores a computer program P which, when executed by the processor 6, causes the monitoring device 5 to execute the method described above with reference to Figures 3 and 4.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

Embodiments of the method can be performed by means of dedicated hardware and/or software or any combination of both.

While the principles of the invention have been described above in connection with specific embodiments, it is to be clearly understood that this description is made only by way of example and not as a limitation on the scope of the invention, as defined in the appended claims.

## Claims

1. Method for monitoring a DSL network (1), executed by a monitoring device (5), comprising:
- obtaining (S1) operational data describing the functioning of a plurality of DSL ports, Service Level Agreement data specifying technical requirements associated with respective DSL ports, and ticketing data specifying user complains associated with respective DSL ports,
- determining (S3) quality estimators in function of the operational data and the Service Level agreement data,
- training (S6) a monitoring model in function of the operational data, Service Level Agreement data, quality estimators and ticketing data.

2. Method according to claim 1, wherein the quality estimators include at least one of:
- Mean Time Between Errors, representative of a ratio between ShowTime duration and a number of errors,
- Mean Time Between Resynchronizations, representative of a ratio between ShowTime duration and a number of spontaneous modem resynchronizations,
- Service Bitrate budget, representative of a difference between an actual bitrate and a minimum subscribed bitrate,
- Required bitrate budget, determined as a function of a type of service,
- Quality bitrate budget, representative of a difference between actual bitrate and required bitrate budget,
- Quality level, determined as a function of the type of service.

3. Method according to one of claims 1 and 2, comprising selecting (S2) parameters in the operational data and service level agreement data, wherein the quality estimators are determined in function of the selected parameters and not in function of non-selected parameters, and wherein the monitoring model is trained in function of the selected parameters and not in function of non-selected parameters.

4. Method according to claim 3, wherein the selected parameters include at least one of:
- Actual bitrate
- Errored Seconds
- Code Violations
- Severely Errored seconds
- Spontaneous modem resynchronization
- Showtime duration
- Minimum subscribed bitrate
- Type of service.

5. Method according to one of claims 1 to 4, wherein the operational data specifies successive values of DSL operational parameters over a time period, the method comprising determining (S5) a feature set in function of the operational data and the quality estimators by feature extraction, wherein the feature set has a lower dimension than the operational data and the quality estimators.

6. Method according to claim 5, wherein said feature set is determined by a convolution pre-processing.

7. Method according to one of claims 1 to 6, comprising estimating or predicting (T6) a quality of experience and/or predicting a user complain by using the monitoring model.

8. Method according to claim 7, comprising executing a corrective action in response to predicting a user complain.

9. Computer program (P) comprising instructions for performing the method of one of claims 1 to 8 when said instructions are executed by a computer.

10. Monitoring device (5) for monitoring a DSL network (1), comprising means (6, 7, P) configured for:
- obtaining operational data describing the functioning of a plurality of DSL ports, Service Level Agreement data specifying technical requirements associated with respective DSL ports, and ticketing data specifying user complains associated with respective DSL ports,
- determining quality estimators in function of the operational data and the Service Level agreement data,
- training a monitoring model in function of the operational data, Service Level Agreement data, quality estimators and ticketing data.

## Amended claims

### Amended claims in accordance with Rule 137(2) EPC.

1. Method for monitoring a DSL network (1), executed by a monitoring device (5), comprising:
- obtaining (S1) operational data describing the functioning of a plurality of DSL ports, Service Level Agreement data specifying technical requirements associated with respective DSL ports, and ticketing data specifying user complains associated with respective DSL ports,
wherein the operational data specifies operational parameters, said operational parameters including at least one of:
- an Actual Power,
- an Actual Noise Margin
- an Actual Bitrate
- an Attenuation
- an Electrical Length
- a Code violation
- Errored seconds
- Severely errored seconds
- Modem failed initializations
- Modem resynchronization
- a Showtime duration
- an Actual Impulse Noise protection
- an Actual Delay,
wherein said technical requirements include at least one of:
- a Minimum subscribed bitrate
- a Type of service,
**characterized by**:
- selecting (S2) parameters in the operational parameters and technical requirements, wherein the selected parameters include at least one of:
- Actual bitrate
- Errored Seconds
- Code Violations
- Severely Errored seconds
- Spontaneous modem resynchronization
- Showtime duration
- Minimum subscribed bitrate
- Type of service,
- determining (S3) quality estimators in function of the selected parameters and not in function of non-selected parameters,
- training (S6) a monitoring model in function of the selected parameters and not in function of non-selected parameters, and in function of the quality estimators and ticketing data.

2. Method according to claim 1, wherein the quality estimators include at least one of:
- Mean Time Between Errors, representative of a ratio between ShowTime duration and a number of errors,
- Mean Time Between Resynchronizations, representative of a ratio between ShowTime duration and a number of spontaneous modem resynchronizations,
- Service Bitrate budget, representative of a difference between an actual bitrate and a minimum subscribed bitrate,
- Required bitrate budget, determined as a function of a type of service,
- Quality bitrate budget, representative of a difference between actual bitrate and required bitrate budget,
- Quality level, determined as a function of the type of service.

3. Method according to one of claims 1 to 2, wherein the operational data specifies successive values of DSL operational parameters over a time period, the method comprising determining (S5) a feature set in function of the operational data and the quality estimators by feature extraction, wherein the feature set has a lower dimension than the operational data and the quality estimators.

4. Method according to claim 3, wherein said feature set is determined by a convolution pre-processing.

5. Method according to one of claims 1 to 4, comprising estimating or predicting (T6) a quality of experience and/or predicting a user complain by using the monitoring model.

6. Method according to claim 5, comprising executing a corrective action in response to predicting a user complain.

7. Computer program (P) comprising instructions for performing the method of one of claims 1 to 6 when said instructions are executed by a computer.

8. Monitoring device (5) for monitoring a DSL network (1), comprising means (6, 7, P) configured for performing the method of one of claims 1 to 6.
